# EUROPEAN PATENT APPLICATION

(11) **EP 4 549 398 A1**
(43) Date of publication of application: **07.05.2025**
(21) Application number: 24209001.7
(22) Date of filing: 25.10.2024
(51) Int. Cl.: C01G 53/50

(54) **POSITIVE ELECTRODE ACTIVE MATERIAL, PREPARATION METHOD THEREOF, POSITIVE ELECTRODE, AND RECHARGEABLE LITHIUM BATTERIES**

(30) Priority: 31.10.2023 KR 20230148297
(71) Applicant: SAMSUNG SDI CO., LTD., Yongin-si, Gyeonggi-do 17084 (KR)
(72) Inventor: CHOO, Sung Ho, 17084 Yongin-si (KR); KIM, Young-Ki, 17084 Yongin-si (KR); KONG, Youngsun, 17084 Yongin-si (KR); KANG, Seok Mun, 17084 Yongin-si (KR); YOON, Jaesang, 17084 Yongin-si (KR); DOO, Sungwook, 17084 Yongin-si (KR); KANG, Gwiwoon, 17084 Yongin-si (KR); JUN, Dowook, 17084 Yongin-si (KR); KANG, Byungwuk, 17084 Yongin-si (KR); JEONG, Jaeyong, 17084 Yongin-si (KR)
(74) Representative: Marks & Clerk LLP

(57) **Abstract**

Disclosed are a positive electrode active material, a method of preparing the same, a positive electrode, and a rechargeable lithium battery, the positive electrode active material including core particles including a layered lithium nickel-manganese-based composite oxide having a nickel content of greater than or equal to 60 mol% based on 100 mol% of a total metal excluding lithium in the layered lithium nickel-manganese-based composite oxide, and a coating layer on the surface of the core particle and including Al, wherein an Al content based on a total of 100 at% of Ni, Mn, and Al on a surface of the positive electrode active material is 20 at% to 33 at%.

## Description

### BACKGROUND

### 1. Field

Positive electrode active materials, preparation methods thereof, positive electrodes including the same, and rechargeable lithium batteries are disclosed.

### 2. Description of the Related Art

A portable information device such as a cell phone, a laptop, smart phone, and the like or an electric vehicle has used a rechargeable lithium battery having high energy density and easy portability as a driving power source. Recently, research has been actively conducted to use a rechargeable lithium battery having high energy density as a driving power source and/or power storage power source for hybrid or electric vehicles.

Various positive electrode active materials have been investigated to realize rechargeable lithium batteries for applications to such uses. Among them, lithium nickel-based oxide, lithium nickel manganese cobalt composite oxide, lithium nickel cobalt aluminium composite oxide, and lithium cobalt oxide are mainly used as positive electrode active materials. However, while interest in large-sized, high-capacity, and/or high-energy-density rechargeable lithium batteries has recently increased rapidly, the supply of positive electrode active materials containing cobalt, a rare metal, is expected to be severely insufficient. Because cobalt is expensive and there are not many remaining reserves, there is an interest in developing positive electrode active materials that exclude cobalt or reduce its content.

### SUMMARY

Some embodiments of the present disclosure provide a positive electrode active material including lithium nickel-manganese-based composite oxide, which implements a high-concentration aluminium coating of uniform thickness to improve the performance of rechargeable lithium batteries at high temperature and high voltage, capacity characteristics, initial charge/discharge efficiency, and high-temperature cycle-life characteristics.

In some embodiments, a positive electrode active material includes core particles including a layered lithium nickel-manganese-based composite oxide having a nickel content of greater than or equal to 60 mol% based on 100 mol% of a total metal excluding lithium in the layered lithium nickel-manganese-based composite oxide, and a coating layer on the surface of the core particle and including Al, wherein an Al content based on a total of 100 at% of Ni, Mn, and Al on a surface of the positive electrode active material is 20 at% to 33 at%.

In some embodiments, a method of preparing a positive electrode active material includes (i) providing core particles including a layered lithium nickel-manganese-based composite oxide having a nickel content of greater than or equal to 60 mol% based on 100 mol% of a total metal excluding lithium in the layered lithium nickel-manganese-based composite oxide, (ii) adding aluminium sulfate and the core particles to an aqueous solvent and mixing them together to prepare a mixed solution, and (iii) removing the aqueous solvent from the mixed solution, drying the resulting product, and performing heat treatment at a temperature range of 730 °C to 800 °C to obtain a positive electrode active material.

In some embodiments, a positive electrode includes a positive electrode current collector and a positive electrode active material layer on the positive electrode current collector, wherein the positive electrode active material layer includes the aforementioned positive electrode active material.

In some embodiments, a rechargeable lithium battery includes the positive electrode, a negative electrode, and an electrolyte.

At least some of the above and other features of the invention are set out in the claims.

The positive electrode active material according to some embodiments may maximize or increase capacity, while minimizing or reducing a production cost, to ensure long cycle-life characteristics and improve high-voltage characteristics and high-temperature storage characteristics. If the positive electrode active material is applied to a rechargeable lithium battery, high initial charge/discharge capacity and efficiency may be achieved under high-voltage operating conditions, long cycle-life characteristics may be realized, and an amount of gas generated due to the high-voltage and high-temperature operation may be effectively suppressed or reduced.

### BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.
FIG. 1 is a cutaway perspective view schematically showing a rechargeable lithium battery according to some embodiments.
FIG. 2 is a cross-sectional view schematically showing a rechargeable lithium battery according to some embodiments.
FIGS. 3-4 are perspective views schematically showing rechargeable lithium batteries according to some embodiments.
FIG. 5 is a scanning electron microscope (SEM) image of the surface of the positive electrode active material of Comparative Example 1.
FIG. 6 is an SEM image of the surface of the positive electrode active material of Example 1.
FIG. 7 is an SEM image of the surface of the positive electrode active material of Example 2.
FIG. 8 is an SEM image of the surface of the positive electrode active material of Example 3.
FIG. 9 is an SEM image of the surface of the positive electrode active material of Example 4.
FIG. 10 is an SEM image of the surface of the positive electrode active material of Comparative Example 4.
FIG. 11 is an SEM image of a cross-section of the positive electrode active material of Comparative Example 1 cut with a focused ion beam (FIB).
FIG. 12 is an energy dispersive X-ray spectroscopy (EDS) analysis image highlighting the Al element in FIG. 11.
FIG. 13 is an SEM image of a cross-section of the positive electrode active material of Example 1 cut with FIB.
FIG. 14 is an EDS analysis image highlighting the Al element in FIG. 13.
FIG. 15 shows an energy profiling energy dispersive X-ray spectroscopy (EP-EDS) analysis results for the positive electrode active materials of Examples 1 to 4 and Comparative Examples 1 to 4, showing the ratios of Al contents (at%) (AI/(Ni+Mn+AI)) to the total amount of Ni, Mn, and Al of 100 at% on the surface of the secondary particle.
FIG. 16 is a transmission electron microscope (TEM) image showing an enlarged cross-section of a primary particle located at the outermost portion of the secondary particle in the positive electrode active material prepared in Example 1.
FIG. 17 shows the results of EDS line profile analysis from the particle surface shown in FIG. 16 to the inside of the particle.

### DETAILED DESCRIPTION

Hereinafter, example embodiments will be described in more detail so that those of ordinary skill in the art can easily implement them. However, the subject matter of this disclosure may be embodied in many different forms and is not to be construed as limited to the example embodiments set forth herein.

The terminology used herein is used to describe embodiments only, and is not intended to limit the scope of the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

Herein, it should be understood that terms such as "comprises," "includes," or "have" are intended to designate the presence of an embodied feature, number, step, element, or a combination thereof, but they do not preclude the possibility of the presence or addition of one or more other features, numbers, steps, elements, or a combination thereof.

In the drawings, the thickness of layers, films, panels, regions, etc., may be exaggerated for clarity and like reference numerals designate like elements throughout the specification. It will be understood that if an element such as a layer, film, region, and/or substrate is referred to as being "on" another element, it can be directly on the other element or intervening elements may also be present. In contrast, if an element is referred to as being "directly on" another element, there are no intervening elements present.

In embodiments, "layer" herein includes not only a shape formed on the whole surface if viewed from a plan view, but also a shape formed on a partial surface.

The average particle diameter may be measured by any suitable method generally used in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, if a definition is not otherwise provided, the average particle diameter means a diameter (D₅₀) of particles having a cumulative volume of 50 volume% in the particle size distribution that is obtained by measuring the size (diameter or length of the major axis) of 20 particles at random in a scanning electron microscope image.

Herein, "or" is not to be construed as an exclusive meaning, for example, "A or B" is construed to include A, B, A+B, and/or the like.

"Metal" is interpreted as a concept including ordinary metals, transition metals and metalloids (semi-metals).

### Positive Electrode Active Material

In some embodiments, a positive electrode active material includes core particles including a layered lithium nickel-manganese-based composite oxide having a nickel content of greater than or equal to 60 mol% based on 100 mol% of a total metal excluding lithium in the layered lithium nickel-manganese-based composite oxide, and a coating layer on the surface of the core particle and including Al. An Al content based on a total of 100 at% of Ni, Mn, and Al on a surface of the positive electrode active material is 20 at% to 33 at%.

The Al content on the surface of the positive electrode active material may be measured through energy profiling energy dispersive X-ray spectroscopy (EP-EDS).

As the price of cobalt, a rare metal, has recently risen sharply, there is an interest in developing positive electrode active materials that exclude cobalt or reduce its content. Among which a positive electrode active material having an olivine crystal structure such as lithium iron phosphate (LFP), lithium manganese phosphate (LMP), lithium manganese iron phosphate (LMFP), and the like or a spinel crystal structure such as lithium manganese oxide (LMO) and the like has a limitation in realizing high capacity due to a small available lithium amount within the structure. The layered nickel-manganese positive electrode active material has excellent capacity and efficiency characteristics due to the high available lithium capacity in the structure, making it suitable as a material for high-capacity batteries. However, as cobalt, which plays a key role in the layered structure, is removed, structural stability decreases, resistance (e.g., electrical resistance) increases, and it becomes difficult to secure long cycle-life characteristics. The layered nickel-manganese positive electrode active material, from which cobalt is excluded, may rather have a problem of accelerated side reaction with an electrolyte under high-voltage and high-temperature conditions, resultantly increasing gas generation and deteriorating cycle-life characteristics.

In some embodiments, the surface of the lithium nickel-manganese-based positive electrode active material is uniformly (or substantially uniformly) coated with aluminium, and an Al concentration on the surface is optimized or improved, thereby providing a method that is capable of strengthening the particle surface, maintaining a stable structure even at high voltage, realizing high capacity and long cycle-life characteristics and high temperature, and improving storage characteristics.

If coating the surface of secondary particles of a positive electrode active material including lithium nickel-manganese-based composite oxide with aluminium, aluminium has a strong tendency to diffuse into the interior of the secondary particles, and thus it is not easy to actually implement a uniform (or substantially uniform) coating of high-concentration aluminium in the form of a shell on the surface of secondary particles. In some embodiments, a coating method most suitable for the characteristics of lithium nickel-manganese-based composite oxide is provided, and conditions for coating a high concentration of Al at a uniform (or substantially uniform) and thin thickness on the surface of secondary particles without increasing resistance (e.g., electrical resistance) are provided. Accordingly, the Al concentration on the surface of the secondary particle, for example, the ratio of AI/(Ni+Mn+AI), is confirmed to be 20 at% to 33 at%, and a method to actually realize this concentration is provided. The rechargeable lithium battery using the positive electrode active material according to some embodiments is confirmed to have improved initial charge/discharge capacity and efficiency under high-voltage conditions, while concurrently (e.g., simultaneously) improving high-temperature cycle-life characteristics and improving high-temperature storage characteristics.

### Core Particles

The core particles include lithium nickel-manganese-based composite oxide. A nickel content of the lithium nickel-manganese-based composite oxide is greater than or equal to 60 mol%, for example, 60 mol% to 80 mol%, 65 mol% to 80 mol%, 70 mol% to 80 mol%, 60 mol% to 79 mol%, 60 mol% to 78 mol%, or 60 mol% to 75 mol%, based on 100 mol% of a total metal excluding lithium in the lithium nickel-manganese-based composite oxide. If the nickel content satisfies the above ranges, high capacity can be achieved and structural stability can be increased even if the cobalt content is reduced.

A manganese content of the lithium nickel-manganese-based composite oxide may be, for example, greater than or equal to 15 mol%, for example, 15 mol% to 40 mol%, 15 mol% to 35 mol%, 15 mol% to 30 mol%, or 20 mol% to 30% based on 100 mol% of a total metal excluding lithium in the lithium nickel-manganese-based composite oxide. If the manganese content satisfies the above ranges, the positive electrode active material may improve structural stability while realizing high capacity.

The lithium nickel-manganese-based composite oxide may be a lithium nickel-manganese-aluminium-based composite oxide that further includes aluminium in addition to nickel and manganese. If the composite oxide includes aluminium, it is beneficial to maintain a stable layered structure even if the cobalt element is excluded from the structure. An aluminium content of the lithium nickel-manganese-aluminium-based composite oxide based on 100 mol% of the total metal excluding lithium in the lithium nickel-manganese-aluminium-based composite oxide may be greater than or equal to 0.1 mol%, greater than or equal to 0.5 mol%, or greater than or equal to 1 mol%, for example, 1 mol% to 3 mol%, 1 mol% to 2.5 mol%, 1 mol% to 2 mol%, or 1.5 mol% to 2.5 mol%. If the aluminium content satisfies the above ranges, a stable layered structure may be maintained even if cobalt is excluded, the problem of structure collapse due to charging and discharging may be suppressed or reduced, and long cycle-life characteristics of the positive electrode active material may be realized.

According to some embodiments, a concentration of aluminium within the core particle may be uniform (or substantially uniform). In embodiments, a concentration of aluminium within the core particle being uniform means that there is not a concentration gradient of aluminium from the center to the surface within the core particle, or that the aluminium concentration in the internal portion of the core particle is neither higher nor lower than in the surface portion, and that the aluminium within the core particle is evenly distributed. This may be a structure obtained by using aluminium raw materials during precursor production without additional doping of aluminium during the synthesis of the core particles and thereby synthesizing a composite oxide using nickel-manganese-aluminium-based hydroxide as a precursor. The core particles may be in a form of a secondary particle in which a plurality of primary particles are agglomerated, and the aluminium content inside the primary particle may be the same or similar regardless of the location of the primary particle. In embodiments, if a primary particle is selected at a random position in the cross-section of a secondary particle and the aluminium content is measured inside the primary particle rather than at its interface, regardless of the location of the primary particle, for example, whether the primary particle is close to the center of the secondary particle or close to the surface, the aluminium content may be the same/similar/uniform. In this structure, a stable layered structure can be maintained even if cobalt is absent or is present in a very small amount, and aluminium by-products or aluminium aggregates are not generated (or substantially not generated), so that the capacity, efficiency, and cycle-life characteristics of the positive electrode active material can be improved at the same time.

The lithium nickel-manganese-based composite oxide may be represented by Chemical Formula 1.

Chemical Formula 1 Liₐ₁Niₓ₁Mn_{y1}Al_{z1}M¹_{w1}O_{2-b1}X_{b1}

In Chemical Formula 1, 0.9≤a1≤1.8, 0.6≤x1≤0.8, 0.1≤y1≤0.4, 0≤z1≤0.03, 0 ≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y and Zr, and X is one or more elements selected from F, P, and S.

In Chemical Formula 1, for example, 0.9≤a1≤1.5, or 0.9≤a1≤1.2. In embodiments, Chemical Formula 1 may include aluminium, in which case it may satisfy 0.6≤x1≤0.8, 0.1≤y1≤0.39, 0.01≤z1≤0.03, and 0≤w1≤0.29, for example, 0.6≤ x1≤0.8, 0.1≤y1≤0.39, 0.01<z1≤0.03, and 0≤w1≤0.29.

In Chemical Formula 1, for example, 0.6≤x1≤0.79, 0.6≤x1≤0.78, 0.6≤x1≤ 0.75, 0.65≤x1≤0.8, or 0.7≤x1≤0.79; 0.1≤y1≤0.35, 0.1≤y1≤0.30, 0.1≤y1≤0.29, 0.15≤ y1≤0.39, or 0.2≤y1≤0.3; 0.01≤z1≤0.025, 0.01<z1≤0.02, or 0.01<z1≤0.019; and 0≤w1 ≤0.28, 0≤w1≤0.27, 0≤w1≤0.26, 0≤w2≤0.25, 0≤w1≤0.24, 0≤w1≤0.23, 0≤w1≤0.22, 0 ≤w1≤0.21, 0≤w1≤0.2, 0≤w1≤0.15, 0≤w1≤0.1, or 0≤w1≤0.09.

For example, the lithium nickel-manganese-based composite oxide may not contain cobalt or may contain a small amount of cobalt, and the cobalt content may be 0 mol% to 0.01 mol% based on 100 mol% of a total metal excluding lithium in the lithium nickel-manganese-based composite oxide.

The core particles may be in the form of secondary particles made by agglomerating a plurality of primary particles. The secondary particles may be spherical, elliptical, polyhedral, and/or irregular in shape, and the primary particles may be spherical, elliptical, plate-shaped, or a combination thereof.

The core particle is susceptible to chemical attacks from components in an electrolyte, if a battery is operated under high-voltage or high-temperature conditions, and thus may have many side reactions with the electrolyte, resulting in increasing an amount of gas generation and thereby, deteriorating battery cycle-life and safety, but these problems may be addressed by introducing a coating layer according to some embodiments which will be further described below, thereinto.

### Coating Layer

The positive electrode active material according to some embodiments includes an Al-rich coating layer on the surface of the core particle. The Al content measured on the particle surface of the positive electrode active material is 20 at% to 33 at% based on a total of 100 at% of Ni, Mn, and Al. For example, the positive electrode active material particle may be a secondary particle made by agglomerating a plurality of primary particles, and in embodiments, it may refer to the Al content measured on the surface of the secondary particle.

The Al content on the surface of the positive electrode active material particle, for example, AI/(Ni+Mn+AI), may be, for example, 21 at% to 32 at%, or 22 at% to 31.5 at%. The content of each element and Al content on the surface of the positive electrode active material particles can be measured by EP-EDS.

The Al content of the coating layer may be 0.5 mol% to 1.5 mol%, for example, 0.6 mol% to 1.4 mol%, 0.7 mol% to 1.3 mol%, or 0.8 mol% to 1.2 mol% based on 100 mol% of a total metal excluding lithium in the positive electrode active material. The foregoing refers to a content of aluminium alone included in the coating layer, separately from the aluminium that may be included within the core particle. The Al content of the coating layer in the entire positive electrode active material can be measured, for example, through SEM-EDS analysis of the surface and/or a cross-section of the positive electrode active electrode material. If the aluminium content in the coating layer satisfies the above ranges, the coating layer may have a uniform (or substantially uniform) and thin thickness, which may not increase resistance (e.g., electrical resistance) of the positive electrode active material and effectively suppress or reduce a side reaction with the electrolyte and thereby, improve cycle-life characteristics of a rechargeable lithium battery under high-voltage and high-temperature conditions. For example, if the aluminium content of the coating layer is excessive, a uniform (or substantially uniform) coating layer may not be formed or resistance (e.g., electrical resistance) may increase, which may reduce charge/discharge efficiency and cycle-life characteristics, and if the aluminium content of the coating layer is too small, a coating layer of a suitable or appropriate thickness is not formed and an effect of suppressing or reducing side reactions with the electrolyte may be reduced.

In some embodiments, the Al content of the coating layer is adjusted to 0.5 mol% to 1.5 mol% based on 100 mol% of a total metal excluding lithium in the entire positive electrode active material, and the coating method and conditions are adjusted so that the AI/(Ni+Mn+AI) ratio on the surface of the positive electrode active material satisfy 20 at% to 33 at%. This Al coating layer can improve structural stability of lithium nickel-manganese-based composite oxide and improve high-voltage characteristics.

The coating layer according to some embodiments may be in the form of a film that continuously surrounds the surface of the core particle, for example, or may be in the form of a shell that surrounds the entire surface of the core particle. The foregoing is distinct from a structure in which only a portion of the surface of the core particle is partially coated. According to some embodiments, the coating layer may be formed to entirely cover the surface of the core particle and may be formed to be very thin and uniform (or substantially uniform) in thickness, and therefore the positive electrode active material does not increase resistance (e.g., electrical resistance) or decrease capacity, improves structural stability, effectively suppresses or reduces side reactions with electrolytes, reduces the amount of gas generated under high-voltage and high-temperature conditions, and achieves long cycle-life characteristics.

The coating layer may have a thickness of 5 nm to 200 nm, for example, 5 nm to 150 nm, 5 nm to 100 nm, 5 nm to 80 nm, 5 nm to 50 nm, or 10 nm to 50 nm. If the coating layer satisfies the above thickness ranges, the structural stability of the positive electrode active material may be improved without increasing resistance (e.g., electrical resistance) or reducing capacity due to the coating, and the side reaction with the electrolyte may be effectively suppressed or reduced. The thickness of the coating layer can be measured through, for example, SEM, TEM, TOF-SIMS, XPS, and/or EDS analysis, and, for example, may be measured through EDS line profile analysis of a cross-section of the positive electrode active material.

The coating layer according to some embodiments is thin and uniform (or substantially uniform) in thickness, ranging from tens to hundreds of nanometers. For example, a deviation in coating layer thickness in one positive electrode active material particle may be less than or equal to 20%, less than or equal to 18%, or less than or equal to 15%. Herein, the deviation in coating layer thickness refers to the coating layer thickness in one positive electrode active material particle. For example, the deviation of the coating layer thickness may be calculated by measuring the thickness of 10 points in an electron microscope image of a cross-section of a single positive electrode active material particle to calculate an arithmetic average, and then dividing the absolute value of the difference between one data and the arithmetic mean value by the arithmetic mean value and multiplying by 100. The fact that the deviation or standard deviation of the coating layer thickness satisfies the above ranges means that a coating layer of uniform (or substantially uniform) thickness is formed in a form of a good film on the surface of the positive electrode active material particle. Accordingly, the structural stability of the positive electrode active material is improved, side reactions with the electrolyte may be effectively suppressed or reduced, and the increase in resistance (e.g., electrical resistance) or decrease in capacity due to coating may be minimized or reduced.

The coating layer may include, for example, a layered aluminium compound, aluminium oxide, lithium-aluminium oxide, LiAlO₂ or a combination thereof.

The coating layer may further contain nickel, manganese, or a combination thereof in addition to aluminium.

An average particle diameter (D₅₀) of the positive electrode active material according to some embodiments is not particularly limited, but may be, for example, 1 µm to 25 µm, 5 µm to 25 µm, 10 µm to 25 µm, 11 µm to 20 µm, or 12 µm to 18 µm. As used herein, if a definition is not otherwise provided, the average particle diameter means a diameter (D₅₀) of particles having a cumulative volume of 50 volume% in a particle size distribution that is obtained by measuring the size (diameter or major axis length) of 20 particles at random in a scanning electron microscope image for positive electrode active materials. If the average particle diameter of the positive electrode active material satisfies the above ranges, high capacity and long cycle-life can be realized and it can be beneficial to form a coating layer according to some embodiments.

In some embodiments, another positive electrode active material may be characterized as not containing sodium. In general, sodium ions can be used in the preparing process of a positive electrode active material, but according to the preparing method further described, core particles having a stable structure and a coating layer of uniform (or substantially uniform) thickness can be formed without using sodium ions.

### Method of Preparing Positive Electrode Active Material

In some embodiments, a method of preparing a positive electrode active material includes (i) preparing core particles including a layered lithium nickel-manganese-based composite oxide having a nickel content of greater than or equal to 60 mol% based on 100 mol% of a total metal excluding lithium in the layered lithium nickel-manganese-based composite oxide, (ii) adding aluminium sulfate and the core particles to an aqueous solvent and mixing them together to prepare a mixed solution, and (iii) removing the aqueous solvent from the mixed solution, drying the resulting product, and performing heat treatment at a temperature range of 730 °C to 800 °C to obtain a positive electrode active material. The aforementioned positive electrode active material may be manufactured through the above method.

In (i), the layered lithium nickel-manganese-based composite oxide may be prepared, for example, by mixing together nickel-manganese-based composite hydroxide and a lithium raw material and performing a first heat treatment. The nickel-manganese-based composite hydroxide may be a precursor of core particles and may be in the form of secondary particles in which a plurality of primary particles are agglomerated. The nickel-manganese-based composite hydroxide (e.g. nickel-manganese-aluminium-based composite hydroxide) may be prepared by a general coprecipitation method.

The nickel content in the nickel-manganese-based composite hydroxide is greater than or equal to 60 mol%, for example, 60 mol% to 80 mol%, 65 mol% to 80 mol%, 70 mol% to 80 mol%, 60 mol% to 79 mol%, 60 mol% to 78 mol%, or 60 mol% to 75 mol%, based on 100 mol% of a total metal in the nickel-manganese-based composite hydroxide. If the nickel content satisfies the above ranges, high capacity can be achieved and structural stability may be increased even if the cobalt content is reduced.

The manganese content in the nickel-manganese-based composite hydroxide may be greater than or equal to 15 mol%, for example, 15 mol% to 40 mol%, 15 mol% to 39 mol%, 15 mol% to 35 mol%, 15 mol% to 30 mol%, or 20 mol% to 30%, based on 100 mol% of a total metal in the nickel-manganese-based composite hydroxide.

In embodiments, if the nickel-manganese-based composite hydroxide further contains aluminium, the content of aluminium may be greater than or equal to 0.1 mol%, greater than or equal to 0.5 mol%, or greater than or equal to 1 mol%, for example, 1 mol% to 3 mol%, 1 mol% to 2.5 mol%, 1 mol% to 2 mol%, or 1 mol% to 1.9 mol%, based on 100 mol% of a total metal in the nickel-manganese-based composite hydroxide. If the manganese and aluminium contents of the composite hydroxide satisfy the above ranges, high capacity may be realized while structural stability of the positive electrode active material may be increased, and production price may be lowered to increase economic efficiency.

In a method for preparing a positive electrode active material according to some embodiments, in the preparation of core particles, aluminium is not additionally doped, but an aluminium raw material may be used to prepare a precursor, so that a nickel-manganese-aluminium-based composite hydroxide, in which aluminium is uniformly (or substantially uniformly) dispersed in the structure, may be used as the precursor. If such a precursor is used, the positive electrode active material may stably maintain a layered structure without cobalt despite repeated charges and discharges, and aluminium byproducts or aluminium aggregates may not be formed, improving capacity and efficiency characteristics and cycle-life characteristics of the positive electrode active material.

The cobalt content in the nickel-manganese-based composite hydroxide may be less than or equal to 0.01 mol%, less than or equal to 0.005 mol%, or less than or equal to 0.001 mol%, based on 100 mol% of a total metal in the nickel-manganese-based composite hydroxide. This nickel-manganese-based composite hydroxide may be economical as it avoids the increase in unit cost caused by cobalt, maximizes or increases capacity, and improves structural stability.

As an example, the nickel-manganese-based composite hydroxide may be represented by Chemical Formula 2.

Chemical Formula 2 Niₓ₂Mn_{y2}Al_{z2}M²_{w2}(OH)₂

In Chemical Formula 2, 0.6≤x2≤0.8, 0.1≤y2≤0.4 0≤z2≤0.03, 0≤w2≤0.3, and 0.9≤x2+y2+z2+w2≤1.1, and M² is one or more elements selected from B, Ba, Ca, Ce, Cr, Fe, Mg, Mo, Nb, Si, Sn, Sr, Ti, V, W, Y, and Zr.

In Chemical Formula 2, for example, 0.6≤x2≤0.8, 0.1≤y2≤0.39, 0.01≤z2≤ 0.03, and 0≤w2≤0.29.

The nickel-manganese-based composite hydroxide is in the form of particles, and the average particle diameter (D₅₀) of the particles may be 1 µm to 25 µm, 5 µm to 25 µm, 5 µm to 20 µm, 10 µm to 25 µm, 10 µm to 20 µm, 11 µm to 18 µm, or 12 µm to 15 µm.

The nickel-manganese-based composite hydroxide and lithium raw material may be mixed together in a molar ratio of 1:0.9 to 1:1.8, for example, 1:0.9 to 1:1.5 or 1:0.9 to 1:1.2. The first heat treatment may be performed under an oxygen atmosphere, for example, within a temperature range of 750 °C to 950 °C, 780 °C to 900 °C, or 810 °C to 890 °C for 2 hours to 20 hours or 4 hours to 12 hours. Through the heat treatment, lithium nickel-manganese-based composite oxide may be obtained. The obtained composite oxide is substantially the same as that described for the core particles in the positive electrode active material section.

Because a layered lithium nickel-manganese-based composite oxide may have significantly different residual lithium contents on the particle surface and different various characteristics from oxides having a different composition, for example, lithium nickel-cobalt-manganese-based composite oxide, lithium nickel-cobalt-aluminium-based composite oxide, lithium cobalt-based oxide, etc., it is believed to be impossible to form a suitable or satisfactory coating layer in the form of a uniform film in a conventional coating method. In some embodiments, a method is proposed that can coat the surface of a layered lithium nickel-manganese-based composite oxide particle with a high concentration of Al with a very uniform (or substantially uniform) thickness.

In (ii), the aqueous solvent may include distilled water, an alcohol-based solvent, or a combination thereof.

Aluminium sulfate is a suitable or optimal raw material for forming the coating layer according to some embodiments. An Al content in the aluminium sulfate may be designed to be 0.5 mol% to 1.5 mol%, for example, 0.6 mol% to 1.4 mol%, 0.7 mol% to 1.3 mol%, or 0.8 mol% to 1.2 mol% based on 100 mol% of a total metal excluding lithium in the finally obtained positive electrode active material. If the Al coating content is designed within the above ranges, the coating layer may be formed to have a thin and uniform (or substantially uniform) thickness of tens to hundreds of nanometers, reducing an amount of gas generated by rechargeable lithium batteries under high-voltage or high-temperature operation conditions and improving high-capacity and long cycle-life characteristics.

In some embodiments, the core particles may be added to the aqueous solvent and mixed together, and then aluminium sulfate may be added to prepare a mixed solution. The foregoing is a wet coating method and may be referred to as a post-addition method in which coating raw materials are added after core particles are added.

In some embodiments, a coating solution may be prepared by first adding aluminium sulfate to an aqueous solvent and mixing, and then adding core particles to the coating solution and mixing together to prepare a mixed solution. This is a salt-dissolution wet coating method and may be referred to as a pre-addition method in which the salt, which is the coating raw material, is first completely dissolved and then the core particles are added.

In the pre-addition method, the adding and mixing together of the aluminium sulfate to the aqueous solvent may be performed for 1 minute to 60 minutes, for example, 3 minutes to 30 minutes, or 5 minutes to 10 minutes. In embodiments, the mixing is performed at a speed of 100 rpm to 800 rpm, for example, 200 rpm to 600 rpm, or 250 rpm to 500 rpm. Under the foregoing conditions, the aluminium sulfate is completely dissolved in the aqueous solvent to obtain a colorless transparent coating solution, and this coating solution may be used to effectively form the uniform (or substantially uniform) aluminium coating layer according to some embodiments. The coating solution, which completed with the mixing, may have, for example, a pH of 1.5 to 3.5, for example, 2.0 to 3.4, 2.5 to 3.3, 2.7 to 3.3, or 2.9 to 3.2.

In the adding the core particles to the prepared coating solution, while stirring the coating solution, the core particles are added thereto to increase coating quality.

In embodiments, the time taken to add the core particles to the coating solution may be 30 seconds/500 g to 2 minutes/500 g, for example, 30 seconds/500 g to 1.5 minutes/500 g, etc. The speed of adding the core particles may be suitably or appropriately adjusted to control a pH of a supernatant after completing the coating, inducing effective formation of the uniform (or substantially uniform) Al coating layer according to some embodiments. If the speed of adding the core particles is too fast, after completing the coating, a pH of the supernatant may be increased and become basic, resultantly forming no uniform coating layer. If the speed of adding the core particles is too slow, a pH of the supernatant may be lowered and become more acidic, still forming no uniform coating layer.

After the core particles are all added to the coating solution, the stirring may be performed for 15 minutes to 60 minutes, for example, 20 minutes to 50 minutes, or 30 minutes to 45 minutes. Time taken from starting the addition of the core particles to the coating solution to completion of the stirring, for example, a coating reaction time may be adjusted to be within 1 hour.

In some embodiments, if the adding and mixing of the core particles to the coating solution is stopped, for example, a pH of the supernatant after completing the mixing or the coating, may be in a range of 5.5 to 7.5. If the pH of the supernatant is less than 5.5, the acidity may become strong and a uniform coating layer may not be formed, and if the pH is more than 7.5, the alkalinity may become strong, making it difficult to form a uniform Al coating layer.

In (iii), after removing the aqueous solvent from the mixed solution, a product therefrom may be, for example, dried at 40 °C to 240 °C, 100 °C to 220 °C, or 150 °C to 200 °C and, for example, under a vacuum condition, and under the foregoing conditions a suitable or satisfactory coated product may be obtained.

The dried product after removing the aqueous solvent from the mixed solution may be referred to as a coated product. The coated product includes core particles and an Al-containing coating layer on the surface of the core particles. For example, the Al-containing coating layer may include a fiber shape, for example, a mesh shape or a spider web shape. Such a mesh may be continuously provided over the entire surface of the core particles. The mesh-shaped coating layer may wrap the core particles with a very thin and uniform (or substantially uniform) thickness to strengthen the surface of the positive electrode active material and improve structural stability and thereby, enhancing high-temperature and high-voltage characteristics.

After mixing together the nickel-manganese-based composite hydroxide and the lithium raw material, the heat treatment of the mixture may be referred to as a primary (e.g. first) heat treatment, while the heat treatment of the coated product may be referred to as a secondary (e.g. second) heat treatment.

In some embodiments, the second heat treatment temperature range is set to be 730 °C to 800 °C. The second heat treatment temperature range may be, for example, 740 °C to 800 °C, 750 °C to 800 °C, 750 °C to 780 °C, or 750 °C to 775 °C. If the second heat treatment temperature is set to the above ranges, the tendency of aluminium to diffuse into the secondary particle may be reduced and it mainly remains on the surface of the secondary particle and at the same time, the surface of the secondary particle can be coated in the form of a very thin and uniform (or substantially uniform) thickness shell. If the heat treatment range is adjusted to the above ranges, the Al content ratio on the surface of the secondary particle, for example, AI/(Ni+Mn+AI), can be controlled to be 20 at% to 33 at%.

If the second heat treatment temperature exceeds 800 °C, the tendency of aluminium to diffuse into the secondary particles increases, making it difficult to form a high-concentration Al-rich coating layer on the surface, and accordingly, the initial charge/discharge capacity and efficiency characteristics at high voltage may be reduced, cycle-life characteristics at high voltage and high temperature may be reduced, and an amount of gas generated during high-temperature storage may increase. If the second heat treatment temperature is less than 730 °C, the tendency of aluminium to diffuse into the secondary particles may be reduced, but some aluminium will be aggregated or distributed unevenly on the surface of the secondary particles, resulting in decreasing cycle-life characteristics under high-temperature and high-voltage conditions and increasing the amount of gas generated if stored at high temperature.

The second heat treatment may be performed, for example, in an oxygen atmosphere for 2 to 20 hours, or 3 to 10 hours.

The obtained positive electrode active material includes core particles including a layered lithium nickel-manganese-based composite oxide having a nickel content of greater than or equal to 60 mol% based on 100 mol% of a total metal excluding lithium in the layered lithium nickel-manganese-based composite oxide, and a coating layer on the surface of the core particles that may include aluminium oxide, lithium-aluminium oxide, or a combination thereof.

### Positive Electrode

In some embodiments, a positive electrode includes a positive electrode current collector and a positive electrode active material layer on the positive electrode current collector, wherein the positive electrode active material layer includes the aforementioned positive electrode active material. The positive electrode active material layer may further include other types (or kinds) of positive electrode active materials in addition to the aforementioned positive electrode active materials. In embodiments, the positive electrode active material layer may optionally further include a binder, a conductive material (e.g., an electrically conductive material), or a combination thereof.

According to some embodiments, a loading level of the positive electrode active material layer may be 10 mg/cm² to 40 mg/cm², for example, 10 mg/cm² to 30 mg/cm², or 10 mg/cm² to 20 mg/cm². In embodiments, a density of the positive electrode active material layer in the final compressed positive electrode may be 3.3 g/cc to 3.7 g/cc, for example, 3.3 g/cc to 3.6 g/cc or 3.4 g/cc to 3.58 g/cc. If applying the positive electrode active material according to some embodiments, it is beneficial to implement such a loading level and positive electrode density, and a positive electrode that satisfies the loading level and positive electrode density in the above ranges is suitable for implementing a high-capacity, high-energy-density rechargeable lithium battery.

### Binder

The binder improves binding properties of positive electrode active material particles with one another and with a current collector. Examples of binders may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity (e.g., electrical conductivity) and any suitable electrically conductive material may be used as a conductive material unless it causes a chemical change (e.g., an undesirable change in the rechargeable lithium battery). Examples of the conductive material may include a carbon-based material such as natural graphite, artificial graphite, carbon black, acetylene black, ketjen black, a carbon fiber, a carbon nanofiber, a carbon nanotube, and the like; a metal-based material of a metal powder or a metal fiber including copper, nickel, aluminium, silver, and the like; a conductive polymer (e.g., an electrically conductive polymer) such as a polyphenylene derivative; or a mixture thereof.

Each content of the binder and the conductive material may be 0.5 wt% to 5 wt% based on 100 wt% of the positive electrode active material layer.
The positive electrode current collector may include Al, but is not limited thereto.

### Rechargeable Lithium Battery

Some embodiments provide a rechargeable lithium battery including the aforementioned positive electrode, a negative electrode, and an electrolyte. As an example, the rechargeable lithium battery may include a positive electrode, a negative electrode, a separator between the positive electrode and the negative electrode, and an electrolyte solution.

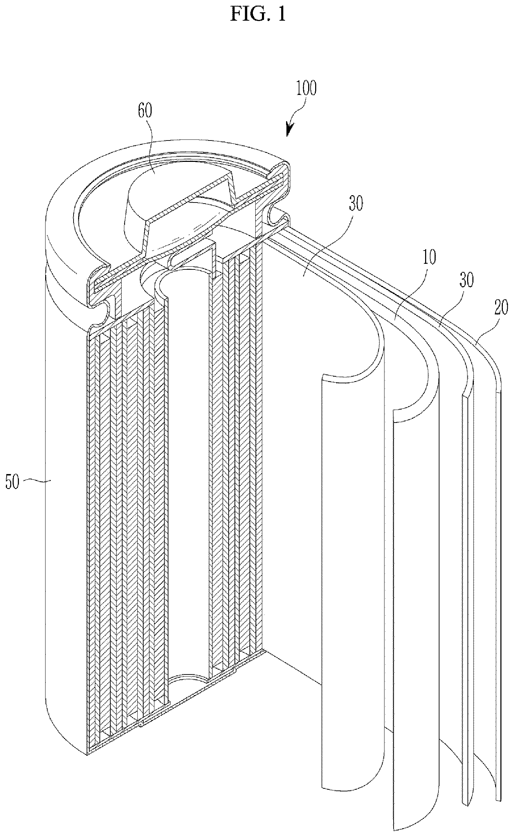

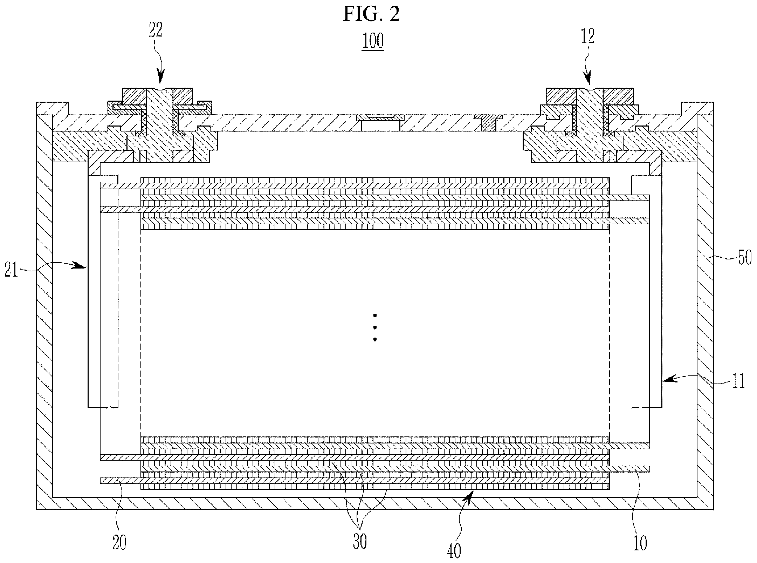

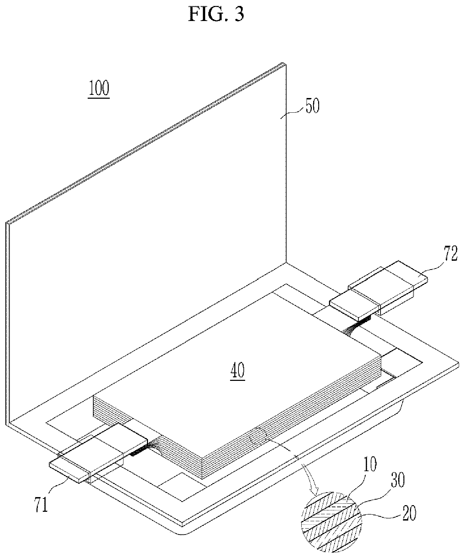

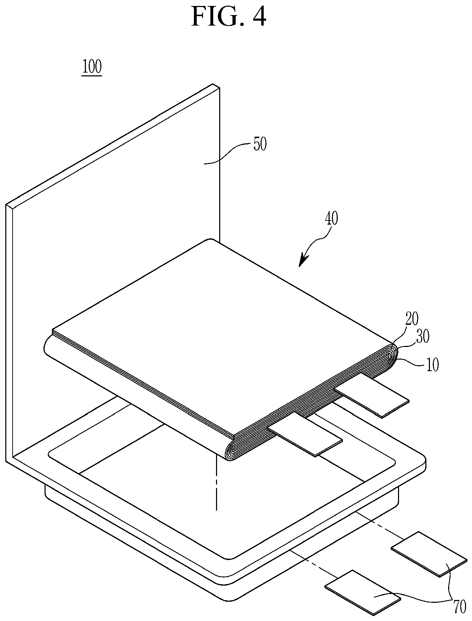

The rechargeable lithium battery may be classified into cylindrical, prismatic, pouch, coin, etc. depending on the shape. FIGS. 1-4 are schematic diagrams showing rechargeable lithium batteries according to some embodiments, where FIG. 1 is a cylindrical battery, FIG. 2 is a prismatic battery, and FIGS. 3-4 are a pouch-shaped battery. Referring to FIGS. 1-4, the rechargeable lithium battery 100 includes an electrode assembly 40 including a separator 30 between the positive electrode 10 and the negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative lead tab 21, and a negative electrode terminal 22. As shown in FIGS. 3-4, the rechargeable lithium battery 100 includes an electrode tab 70 (FIG. 4), for example, a positive electrode tab 71 and a negative electrode tab 72 (FIG. 3) that serve as an electrical path for inducing the current formed in the electrode assembly 40 to the outside.

The rechargeable lithium battery according to some embodiments may be rechargeable at a high voltage, and/or may be suitable for being driven at a high voltage. For example, the charge voltage of the rechargeable lithium battery may be greater than or equal to 4.45 V, 4.45 V to 4.7 V, 4.45 V to 4.6 V, or 4.45 V to 4.55 V. By applying the positive electrode active material according to some embodiments, the rechargeable lithium battery can significantly reduce an amount of gas generated even if charged at high voltage and can achieve high capacity and long cycle-life characteristics.

### Negative Electrode

The negative electrode may include a current collector and a negative electrode active material layer on the current collector, and may further include a negative electrode active material, a binder, a conductive material (e.g., an electrically conductive material), or a combination thereof.

### Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include, for example, crystalline carbon, amorphous carbon, or a combination thereof as a carbon-based negative electrode active material. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, SiOₓ (0 < x < 2), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof), or a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, 0.5 µm to 20 µm. According to some embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon and/or hard carbon, a mesophase pitch carbonized product, and/or calcined coke.

If the silicon-carbon composite includes silicon and amorphous carbon, a content of silicon may be 10 wt% to 50 wt% and a content of amorphous carbon may be 50 wt% to 90 wt% based on 100 wt% of the silicon-carbon composite. In addition, if the composite includes silicon, amorphous carbon, and crystalline carbon, a content of silicon may be 10 wt% to 50 wt%, a content of crystalline carbon may be 10 wt% to 70 wt%, and a content of amorphous carbon may be 20 wt% to 40 wt% based on 100 wt% of the silicon-carbon composite.

In embodiments, a thickness of the amorphous carbon coating layer may be 5 nm to 100 nm. An average particle diameter (D₅₀) of the silicon particles (primary particles) may be 10 nm to 1 µm, or 10 nm to 200 nm. The silicon particles may exist as silicon alone, in the form of a silicon alloy, and/or in an oxidized form. The oxidized form of silicon may be represented by SiOₓ (0<x<2). In embodiments, the atomic content ratio of Si:O, which indicates a degree of oxidation, may be 99:1 to 33:67. As used herein, if a definition is not otherwise provided, an average particle diameter (D₅₀) indicates a particle where an accumulated volume is 50 volume% in a particle distribution.

The Si-based negative electrode active material and/or Sn-based negative electrode active material may be mixed with the carbon-based negative electrode active material. If the Si-based negative electrode active material and/or Sn-based negative electrode active material and the carbon-based negative electrode active material are mixed together and used, the mixing ratio may be a weight ratio of 1:99 to 90:10.

### Binder

The binder serves to well adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, and/or alkali metal salts thereof may be mixed together and used. The alkali metal may be Na, K, and/or Li.

The dry binder may be a polymer material capable of becoming fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity (e.g., electrical conductivity) and any suitable electrically conductive material may be used as a conductive material unless it causes a chemical change (e.g., an undesirable chemical change in the rechargeable lithium battery). Examples of the conductive material include a carbon-based material such as natural graphite, artificial graphite, carbon black, acetylene black, ketjen black, a carbon fiber, a carbon nanofiber, a carbon nanotube, and the like; a metal-based material of a metal powder and/or a metal fiber including copper, nickel, aluminium, silver, and the like; a conductive polymer (e.g., an electrically conductive polymer) such as a polyphenylene derivative; or a mixture thereof.

A content of the negative electrode active material may be 95 wt% to 99.5 wt% based on 100 wt% of the negative electrode active material layer, and a content of the binder may be 0.5 wt% to 5 wt% based on 100 wt% of the negative electrode active material layer. For example, the negative electrode active material layer may include 90 wt% to 99 wt% of the negative electrode active material, 0.5 wt% to 5 wt% of the binder, and 0.5 wt% to 5 wt% of the conductive material.

### Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminium (Al), germanium (Ge), lithium (Li), and/or an alloy thereof, and may be in the form of a foil, sheet, and/or foam. A thickness of the negative electrode current collector may be, for example, 1 µm to 20 µm, 5 µm to 15 µm, or 7 µm to 10 µm.

### Electrolyte

For example, the electrolyte for a rechargeable lithium battery may be an electrolyte solution, which may include a non-aqueous organic solvent and a lithium salt.

The non-aqueous organic solvent serves as a medium that transmits ions taking part in the electrochemical reaction of the rechargeable lithium battery. The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds), and if two or more types (or kinds) are used in a mixture, a mixing ratio can be suitably or appropriately adjusted according to a suitable or desired battery performance, which should be readily apparent to those working in the field upon reviewing this disclosure.

If using a carbonate-based solvent, a cyclic carbonate and a chain carbonate may be mixed together and used, and the cyclic carbonate and the chain carbonate may be mixed together in a volume ratio of 1:1 to 1:9.

The non-aqueous organic solvent may further include an aromatic hydrocarbon-based organic solvent. For example, a carbonate-based solvent and an aromatic hydrocarbon-based organic solvent may be mixed together and used in a volume ratio of 1:1 to 30:1.

The electrolyte solution may further include vinylethylene carbonate, vinylene carbonate, and/or an ethylene carbonate-based compound to improve battery cycle-life.

Examples of the ethylene carbonate-based compound may include fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from LiPF₆, LiBF₄, LiSbF₆, LiAsF₆, LiClO₄, LiAlO₂, LiAlCl₄, LiPO₂F₂, LiCI, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂), (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of 0.1 M to 2.0 M. If the concentration of lithium salt is within the above range, the electrolyte solution has a suitable or appropriate ionic conductivity and viscosity, and thus excellent performance can be achieved and lithium ions can move effectively.

### Separator

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film including any one selected from a polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The porous substrate may have a thickness of 1 µm to 40 µm, for example, 1 µm to 30 µm, 1 µm to 20 µm, 5 µm to 15 µm, or 10 µm to 15 µm.

The organic material may include a (meth)acryl-based copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiOs, BaTiOs, Mg(OH)₂, boehmite, and a combination thereof, but is not limited thereto. An average particle diameter (D₅₀) of the inorganic particles may be 1 nm to 2000 nm, for example, 100 nm to 1000 nm, or 100 nm to 700 nm.

The organic material and the inorganic material may be mixed together in one coating layer, or a coating layer including an organic material and a coating layer including an inorganic material may be stacked.

The thickness of the coating layer may be 0.5 µm to 20 µm, for example, 1 µm to 10 µm, or 1 µm to 5 µm.

Examples and comparative examples of the present disclosure are described below. However, the following examples are only examples of the present disclosure, and the present disclosure is not limited to the following examples.

### Example 1

### 1. Preparation of Positive Electrode Active Material

Ni_{0.75}Mn_{0.23}Al_{0.02}(OH)₂ and LiOH were mixed together in a molar ratio of 1:1.05 and then, primarily heat-treated at 845 °C under an oxygen atmosphere for 8 hours to prepare a lithium nickel-manganese-based composite oxide in a form of secondary particles having a composition of Li_{1.05}Ni_{0.75}Mn_{0.23}Al_{0.02}O₂ and an average particle diameter (D₅₀) of 14 µm.

500 g of the lithium nickel-manganese-based composite oxide together with 600 g of distilled water was added to a 1 L reactor, and aluminium sulfate was added thereto, while stirring the mixture, and then, stirred for 45 minutes. Herein, the aluminium sulfate was designed to have an aluminium content of 1.0 mol% based on 100 wt% of a total metal excluding lithium in a final positive electrode active material.

After removing the solvent from the mixed solution by using an aspirator and filter press, a coated product was obtained through vacuum drying at 190 °C.

The coated product was secondarily heat-treated at 750 °C for 8 hours under an oxygen atmosphere to obtain the final positive electrode active material.

### 2. Manufacturing of Rechargeable Lithium Battery Cell

98.5 wt% of the positive electrode active material, 1.0 wt% of a polyvinylidene fluoride binder, and 0.5 wt% of a carbon nanotube conductive material were mixed together to prepare a positive electrode active material layer slurry, and the slurry was coated on an aluminium foil current collector and then, dried and compressed to manufacture a positive electrode. Herein, a loading level of the positive electrode active material layer was 10 mg/cm², and a density of the finally compressed positive electrode was 3.4 g/cc.

97.5 wt% of a graphite negative electrode active material, 1.5 wt% of carboxymethyl cellulose, and 1 wt% of a styrene butadiene rubber in a water solvent were mixed together to prepare a negative electrode active material layer slurry. The negative electrode active material layer slurry was coated on a copper foil current collector and then, dried and compressed to manufacture a negative electrode.

A polytetrafluoroethylene separator was used, and an electrolyte solution prepared by dissolving 1 M LiPF₆ in a mixed solvent of ethylene carbonate and dimethyl carbonate in a volume ratio of 3:7 was used to manufacture a rechargeable lithium battery cell in a general method.

### Example 2

A positive electrode active material and a rechargeable lithium battery cell were manufactured substantially in the same manner as in Example 1 except that the positive electrode active material was prepared by first adding aluminium sulfate and distilled water to a reactor and mixing them together for 5 minutes while stirring at 350 rpm to prepare a coating solution and then, adding 500 g of the lithium nickel-manganese-based composite oxide according to Example 1 to the coating solution, while continuously stirring, for 1.5 minutes and then, stirring the obtained mixture for 45 minutes.

### Example 3

A positive electrode active material and a rechargeable lithium battery cell were manufactured substantially in the same manner as in Example 2 except that the secondary heat treatment was performed at 775 °C.

### Example 4

A positive electrode active material and a rechargeable lithium battery cell were manufactured substantially in the same manner as in Example 2 except that the secondary heat treatment was performed at 800 °C.

### Comparative Example 1

A positive electrode active material and a rechargeable lithium battery cell were manufactured substantially in the same manner as in Example 1 except that the secondary heat treatment was performed at 825 °C.

### Comparative Example 2

A positive electrode active material and a rechargeable lithium battery cell were manufactured substantially in the same manner as in Comparative Example 1 except that the aluminium content of the aluminium sulfate was designed to be 1.5 mol% based on 100 wt% of the total metal excluding lithium in the final positive electrode active material.

### Comparative Example 3

A positive electrode active material and a rechargeable lithium battery cell were manufactured substantially in the same manner as Comparative Example 1 except that the aluminium content of the aluminium sulfate was designed to be 2.0 mol% based on 100 wt% of the total metal excluding lithium in the final positive electrode active material.

### Comparative Example 4

A positive electrode active material and a rechargeable lithium battery cell were manufactured substantially in the same manner as in Example 2 except that the secondary heat treatment was performed at 725 °C.

For better understanding, design details of the examples and the comparative examples are briefly shown in Table 1.

**Table 1**

| | Al coating content (mol%) | Coating method | Secondary heat treatment temperature |
|---|---|---|---|
| Example 1 | 1 | wet/ post-addition | 750 °C |
| Example 2 | 1 | wet/ pre-addition | 750 °C |
| Example 3 | 1 | wet/ pre-addition | 775 °C |
| Example 4 | 1 | wet/ pre-addition | 800 °C |
| Comparative Example 1 | 1 | wet/ post-addition | 825 °C |
| Comparative Example 2 | 1.5 | wet/ post-addition | 825 °C |
| Comparative Example 3 | 2 | wet/ post-addition | 825 °C |
| Comparative Example 4 | 1 | wet/ pre-addition | 725 °C |

### Evaluation Example 1: SEM Analysis

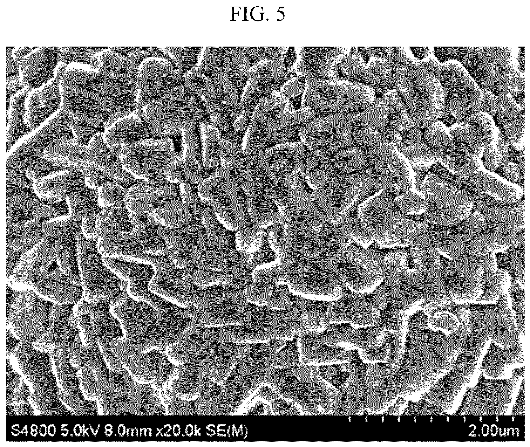

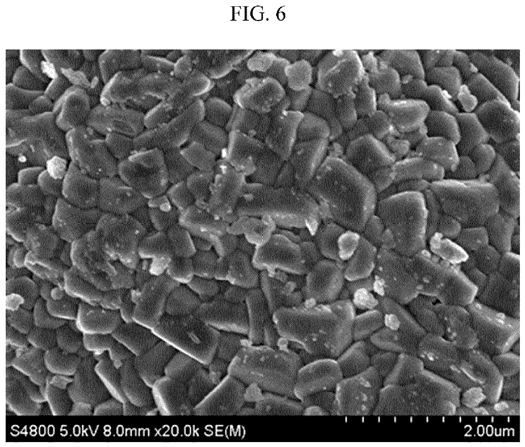

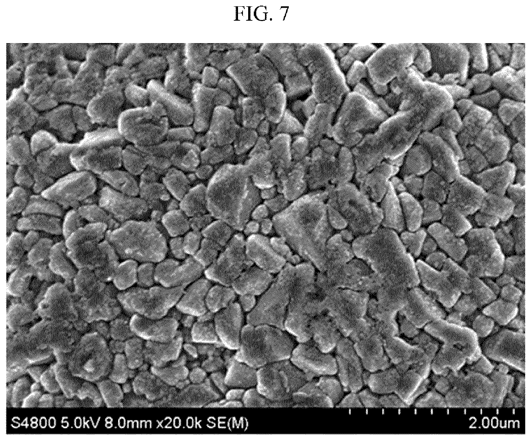

FIG. 5 is an SEM image of the surface of the positive electrode active material of Comparative Example 1, FIG. 6 is an SEM image of the surface of the positive electrode active material of Example 1, and FIG. 7 is an SEM image of the surface of the positive electrode active material of Example 2.

Referring to FIG. 5, Comparative Example 1, because the aluminium was diffused into the positive electrode active material secondary particles, Comparative Example 1 exhibited that the secondary particle surface was smooth, but Example 1 of FIG. 6 and Example 2 of FIG. 7 exhibited that an Al coating layer was confirmed on the secondary particle surface. In Example 1, a micro-sized island-type coating layer was observed, and in Example 2, a nano-sized Al coating layer was observed.

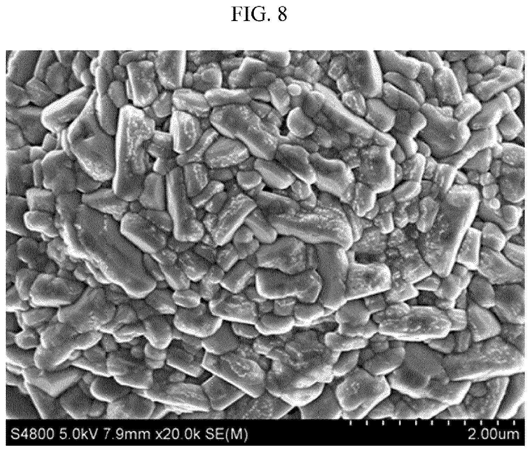

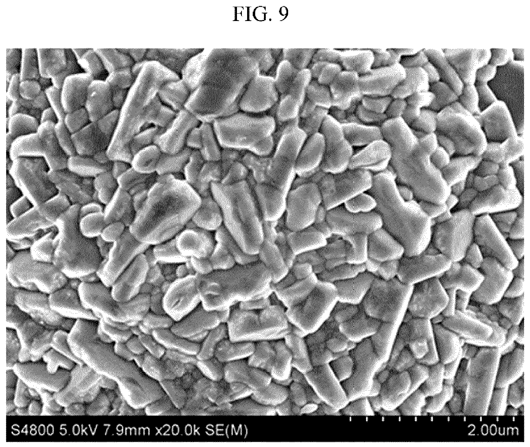

FIG. 8 is an SEM image of the surface of the positive electrode active material of Example 3, and FIG. 9 is an SEM image of the surface of the positive electrode active material of Example 4. Referring to FIGS. 8-9, an Al coating layer was observed on the secondary particle surface.

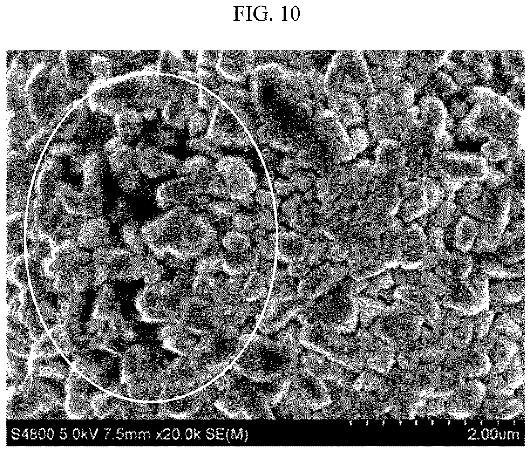

FIG. 10 is an SEM image of the surface of the positive electrode active material of Comparative Example 4, in which a non-uniform coating layer was observed on the secondary particle surface in white circle of FIG. 10 due to 725 °C of a low firing temperature.

### Evaluation Example 2: EDS-Mapping Analysis

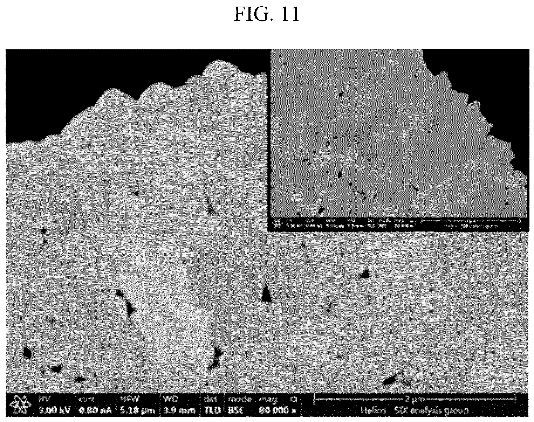

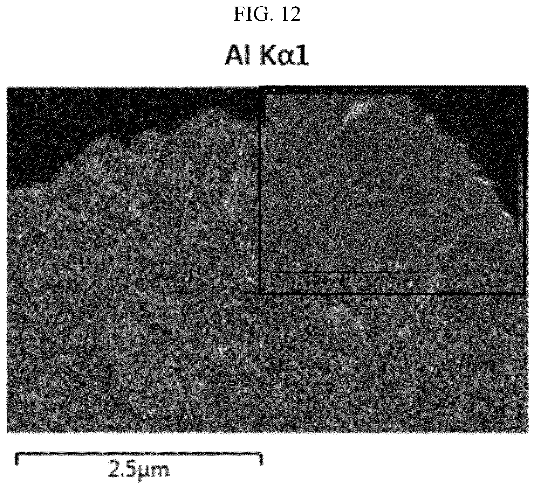

FIG. 11 is an SEM image of a cross-section of the positive electrode active material of Comparative Example 1 cut with a FIB, and FIG. 12 is an EDS analysis image highlighting the Al element in FIG. 11. Referring to FIG. 12, in Comparative Example 1, an Al coating region was observed not only on the secondary particle surface but also at the internal grain boundaries of the particles.

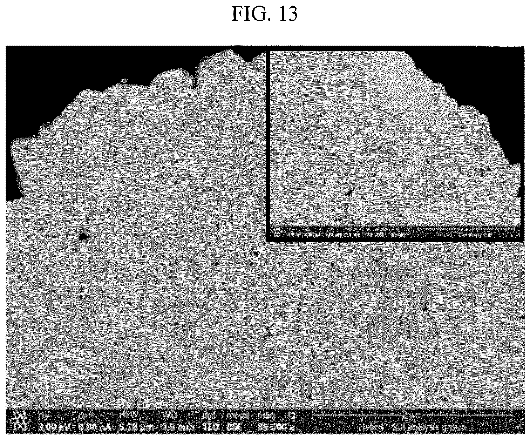

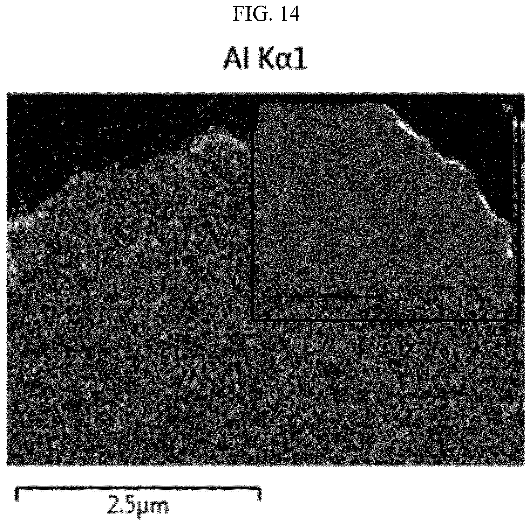

FIG. 13 is an SEM image of a cross-section of the positive electrode active material of Example 1 cut with FIB, and FIG. 14 is an EDS analysis image highlighting the Al element in FIG. 13. Referring to FIG. 14, Example 1, because Al was uniformly coated in a high content on the secondary particle surface rather than diffused into internal boundaries of the secondary particles, Example 1 exhibited a further thicker and more uniform Al-rich coating layer on the secondary particle surface than that of Comparative Example 1.

### Evaluation Example 3: TEM Analysis

On the other hand, as an HR-TEM analysis result of the cross-section of the positive electrode active material according to Example 1, a layered structure was observed even in the Al coating layer on the secondary particle surface as well as inside the secondary particles, and accordingly, the coating layer turned out to include layered lithium aluminium oxide, for example, LiAlO₂.

### Evaluation Example 4: EP-EDS

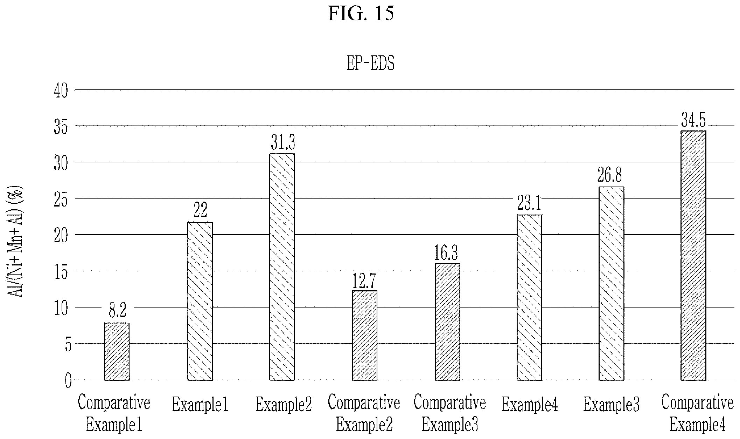

An EP-EDS analysis was performed on the positive electrode active materials of Examples 1 to 4 and Comparative Examples 1 to 4 to calculate a ratio of an Al content (at%) to 100 at% of a total content of Ni, Mn, and Al (AI/(Ni+Mn+AI)) on the secondary particle surface, which was shown in FIG. 15. The EP-EDS analysis was performed using Thermo Fisher's Helios G4 HX under conditions of 3 kV and 0.8 nA.

Referring to FIG. 15, the examples exhibited an Al content ratio of 20% to 33%. Examples 1 and 2, in which firing was performed at 750 °C on the surface, exhibited a higher Al content on the surface than Comparative Example 1, in which firing was performed at 825 °C. Example 3 (775 °C) and Example 4 (800 °C) exhibited a much higher Al content on the surface than Comparative Example 1. Comparative Examples 2 and 3, in which firing was performed at 825 °C like Comparative Example 1 but an Al coating content was increased, exhibited a lower Al content on the secondary particle surface than the examples. Herein, even though a coating amount was increased, if firing was performed at 825 °C, because Al tended to be more diffused into the secondary particles, Comparative Examples 2 and 3 exhibited a lower Al content wrapping the surface coating layer than the examples and thereby, inferior initial charge and discharge capacity and efficiency of the battery cells compared to the examples.

### Evaluation Example 5: TEM and EDS Line Profile Analysis

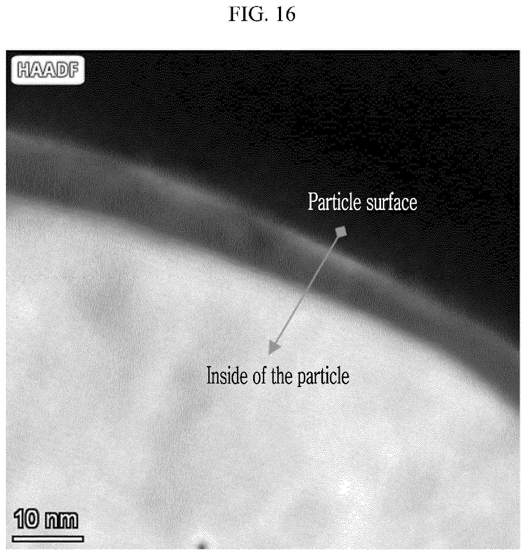

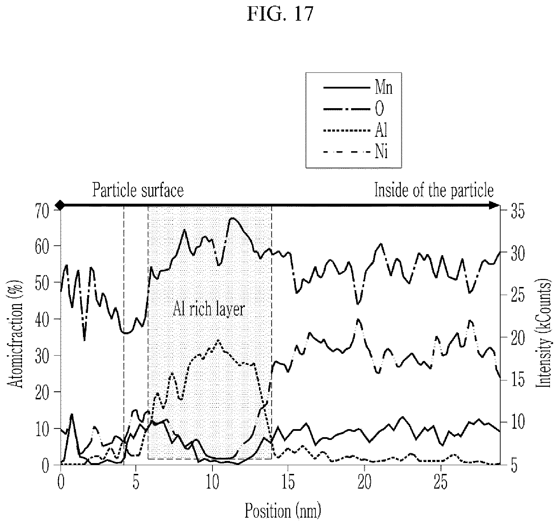

FIG. 16 shows a TEM image of the cross-section of the primary particles at the outermost of the secondary particles in the positive electrode active material of Example 1. An EDS line profile analysis was performed form the particle surface shown in FIG. 16 to the inside of the particle, and the results are shown in FIG. 17. Referring to FIG. 17, an Al-rich coating layer was formed on the secondary particle surface and had a thickness of 10 nm or so.

### Evaluation Example 6: Evaluation of Initial Charge/discharge Capacity and Efficiency, High-temperature Cycle-life Characteristics, and High-temperature Gas Generation Amount of Battery Cell

The rechargeable lithium battery cells of Examples 1 to 4 and Comparative Examples 1 to 4 were charged to an upper limit voltage of 4.45 V at a constant current of 0.2 C and to 0.05 C at the constant voltage and then, discharged to a cut-off voltage of 3.0 V at 0.2 C at 25 °C for initial charge and discharge. Table 2 shows initial charge capacity, initial discharge capacity, and a ratio of the initial discharge capacity to the initial charge capacity as efficiency.

Subsequently, a charge and discharge cycle at 1.0 C within a voltage range of 3.0 V to 4.45 V at 45 °C was 25 times or more repeated to calculate a ratio of 25^{th} cycle discharge capacity to the initial discharge capacity, which is provided as a high-temperature cycle-life in Table 2.

On the other hand, the rechargeable lithium battery cells of Examples 1 to 4 and Comparative Examples 1 to 4, which were completed with the initial charge, were stored at 90 °C for 4 hours and then, measured with respect to an amount of gas generated therefrom, and the results are shown in Table 2.

**Table 2**

| | Al (mol %) | Second heat treatment temperatu re | 0.2 C charge (mAh/g ) | 0.2 C dischar ge (mAh/g ) | efficien cy (%) | High-temper ature cycle-life (% @45°C) | Gas genera tion amoun t (g/cc) |
|---|---|---|---|---|---|---|---|
| Example 1 | 1 | 750 °C | 229.3 | 195.6 | 85.3% | 92.5% | 1.8 |
| Example 2 | 1 | 750 °C | 229.0 | 195.3 | 85.3% | 93.4% | 1.4 |
| Example 3 | 1 | 775 °C | 229.6 | 193.9 | 84.4% | 92.6% | 1.6 |
| Example 4 | 1 | 800 °C | 228.9 | 192.6 | 84.2% | 92.1% | 1.8 |
| Comparative Example 1 | 1 | 825 °C | 229.1 | 195.2 | 85.2% | 88.9% | 2.5 |
| Comparative Example 2 | 1.5 | 825 °C | 228.3 | 194.0 | 85.0% | 89.9% | 2.3 |
| Comparative Example 3 | 2 | 825 °C | 227.8 | 192.9 | 84.7% | 91.2% | 2.0 |
| Comparative Example 4 | 1 | 725 °C | 228.2 | 196.1 | 85.9% | 85.1% | 3.0 |

Comparative Example 1, in which firing was performed at 825 °C, exhibited inferior high-temperature cycle-life characteristics compared to the examples and a larger amount of gas generated at the high-temperature storage than the examples. Comparative Example 2, in which firing was performed at 825 °C and an Al coating content was increased to 1.5 mol%, exhibited deteriorated initial discharge capacity and high-temperature cycle-life characteristics, compared with the examples and in addition, a larger amount of generated gas than the examples. Comparative Example 3, in which firing was performed at 825 °C and an Al coating content was increased to 2.0 mol%, exhibited deteriorated initial charge capacity, initial discharge capacity, and efficiency, compared with the examples, and in addition, a larger amount of generated gas than the examples.

Comparative Example 4, in which firing was performed at 725 °C, had a non-reactant remaining on the secondary particle surface due to the low temperature and exhibited a large amount of gas generated at the high-temperature storage and deteriorated cycle-life characteristics at the high temperature.

Examples 1 to 4, in which an Al-rich coating layer at a high concentration was formed with a uniform thickness on the positive electrode active material secondary particle surface, exhibited improved initial charge and discharge capacity, efficiency, and high-temperature cycle-life characteristics and in addition, a reduced amount of gas generated at the high-temperature storage. On the other hand, among the examples, capacity characteristics were more improved according to a heat treatment temperature, for example, Examples 1 and 2, in which a firing temperature was 750 °C, exhibited much more excellent initial charge and discharge capacity and efficiency, compared with Example 3 (775 °C) and Example 4 (800 °C).

While the subject matter of this disclosure has been described in connection with what is presently considered to be practical example embodiments, it is to be understood that the disclosure is not limited to the disclosed embodiments. On the contrary, it is intended to cover various modifications and equivalent arrangements included within the scope of the appended claims, and equivalents thereof.

Embodiments are set out in the following clauses:
Clause 1. A positive electrode active material, comprising:
   core particles comprising a layered lithium nickel-manganese-based composite oxide having a nickel content of greater than or equal to 60 mol% based on 100 mol% of a total metal excluding lithium in the layered lithium nickel-manganese-based composite oxide, and
   a coating layer on the surface of the core particle and comprising Al,
   wherein an Al content based on a total of 100 at% of Ni, Mn, and Al on a surface of the positive electrode active material is 20 at% to 33 at%.
Clause 2. The positive electrode active material of clause 1, wherein:
   the Al content of the coating layer is 0.5 mol% to 1.5 mol% based on 100 mol% of a total metal excluding lithium in the positive electrode active material.
Clause 3. The positive electrode active material of clause 1 or clause 2, wherein:
   the coating layer is in a form of a shell that continuously surrounds a surface of the core particle.
Clause 4. The positive electrode active material of any one of clauses 1 to 3, wherein:
   the coating layer has a thickness of 5 nm to 200 nm.
Clause 5. The positive electrode active material of any one of clauses 1 to 4, wherein:
   a deviation of a thickness of the coating layer within one positive electrode active material particle is less than or equal to 20%.
Clause 6. The positive electrode active material of any one of clauses 1 to 5, wherein:
   the coating layer comprises a layered aluminium compound.
Clause 7. The positive electrode active material of any one of clauses 1 to 6, wherein:
   the coating layer comprises aluminium oxide, lithium-aluminium oxide, or a combination thereof.
Clause 8. The positive electrode active material of any one of clauses 1 to 7, wherein:
   the coating layer comprises LiAlO₂.
Clause 9. The positive electrode active material of any one of clauses 1 to 8, wherein:
   the coating layer further comprises nickel, manganese, or a combination thereof.
Clause 10. The positive electrode active material of any one of clauses 1 to 9, wherein:
   in the layered lithium nickel-manganese-based composite oxide of the core particle, the nickel content is 60 mol% to 80 mol% and a manganese content is greater than or equal to 15 mol% based on 100 mol% of a total metal excluding lithium nickel in the layered lithium nickel-manganese-based composite oxide.
Clause 11. The positive electrode active material of any one of clauses 1 to 10, wherein:
   the layered lithium nickel-manganese-based composite oxide of the core particle further comprises aluminium, and an aluminium content in the core particle is 1 mol% to 3 mol% based on 100 mol% of a total metal excluding lithium in the layered lithium nickel-manganese-based composite oxide.
Clause 12. The positive electrode active material of clause 11, wherein:
   a concentration of aluminium in the core particle is uniform.
Clause 13. The positive electrode active material of any one of clauses 1 to 12, wherein:
   in the layered lithium nickel-manganese-based composite oxide of the core particle, a cobalt content is 0 mol% to 0.01 mol% based on 100 mol% of a total metal excluding lithium in the layered lithium nickel-manganese-based composite oxide.
Clause 14. The positive electrode active material of any one of clauses 1 to 13, wherein:
   the layered lithium nickel-manganese-based composite oxide of the core particle is represented by Chemical Formula 1:

   Chemical Formula 1 Liₐ₁Niₓ₁Mn_{y1}Al_{z1}M¹_{w1}O_{2-b1}X_{b1}

   wherein in Chemical Formula 1, 0.9≤a1≤1.8, 0.6≤x1≤0.8, 0.1≤y1≤0.4, 0≤z1≤ 0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S.
Clause 15. The positive electrode active material of any one of clauses 1 to 14, wherein:
   the core particles are secondary particles formed by agglomerating a plurality of primary particles, and
   an average particle diameter (D₅₀) of the positive electrode active material is 10 µm to 25 µm.
Clause 16. A method for preparing a positive electrode active material, the method comprising:
   preparing core particles comprising a layered lithium nickel-manganese-based composite oxide having a nickel content of greater than or equal to 60 mol% based on 100 mol% of a total metal excluding lithium in the layered lithium nickel-manganese-based composite oxide,
   adding aluminium sulfate and the core particles to an aqueous solvent and mixing them together to prepare a mixed solution, and
   removing the aqueous solvent from the mixed solution, drying the resulting product, and performing heat treatment at a temperature range of 730 °C to 800 °C to obtain a positive electrode active material.
Clause 17. The method of clause 16, wherein:
   the heat treatment is performed at a temperature in a range of 750 °C to 775 °C.
Clause 18. The method of clause 16 or clause 17, wherein:
   in the layered lithium nickel-manganese-based composite oxide, based on 100 mol% of a total metal excluding lithium in the layered lithium nickel-manganese-based composite oxide, the nickel content is 60 mol% to 80 mol%, a manganese content is greater than or equal to 15 mol%, an aluminium content is 0 mol% to 3 mol%, and a cobalt content is 0 mol% to 0.01 mol%.
Clause 19. The method of any one of clauses 16 to 18, wherein:
   an aluminium content of the aluminium sulfate is 0.5 to 1.5 mol% based on 100 mol% of a total metal excluding lithium in the core particles and a total aluminium of the aluminium sulfate.
Clause 20. The method of any one of clauses 16 to 19, wherein:
   after adding the core particles to the aqueous solvent and mixing, aluminium sulfate is added to prepare a mixed solution.
Clause 21. The method of any one of clauses 16 to 19, wherein:
   a coating solution is prepared by adding aluminium sulfate to the aqueous solvent and mixing, and then adding the core particles to the coating solution and mixing to prepare a mixed solution.
Clause 22. The method of clause 21, wherein:
   a time utilized to add core particles to the coating solution is 30 seconds/500 g to 2 minutes/500 g, and
   a mixing time after adding the core particles to the coating solution is 15 to 60 minutes, and
   a pH of the supernatant after completion of mixing is 5.5 to 7.5.
Clause 23. The method of any one of clauses 16 to 22, wherein:
   after removing the aqueous solvent from the mixed solution, drying the obtained product is carried out in a vacuum condition at 40 °C to 240 °C.
Clause 24. The method of any one of clauses 16 to 23, wherein:
   a coated product obtained by removing the aqueous solvent from the mixed solution and drying the resulting product comprises the core particles and an Al-containing coating layer on the surface of the core particles, and the Al-containing coating layer is in a form of a mesh or a spider web.
Clause 25. The method of any one of clauses 16 to 24, wherein:
   the positive electrode active material comprises core particles comprising a layered lithium nickel-manganese-based composite oxide having a nickel content of greater than or equal to 60 mol% based on 100 mol% of a total metal excluding lithium in the layered lithium nickel-manganese-based composite oxide, and a coating layer on the surface of the core particles and comprising aluminium oxide, lithium-aluminium oxide, or a combination thereof.
Clause 26. A positive electrode, comprising:
   a positive electrode current collector, and
   a positive electrode active material layer on the positive electrode current collector,
   wherein the positive electrode active material layer comprises the positive electrode active material of any one of clauses 1 to 15.
Clause 27. The positive electrode of clause 26, wherein:
   the positive electrode active material layer has a loading level of 10 mg/cm² to 40 mg/cm².
Clause 28. The positive electrode of clause 26 or clause 27, wherein:
   the positive electrode active material layer has a density of 3.3 g/cc to 3.7 g/cc.
Clause 29. A rechargeable lithium battery, comprising:
   the positive electrode of any one of clauses 26 to 28,
   a negative electrode, and
   an electrolyte.
Clause 30. The rechargeable lithium battery of clause 29, wherein:
   a charging voltage is greater than or equal to 4.45 V.

**Description of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
core particles comprising a layered lithium nickel-manganese-based composite oxide having a nickel content of greater than or equal to 60 mol% based on 100 mol% of a total metal excluding lithium in the layered lithium nickel-manganese-based composite oxide, and
a coating layer on the surface of the core particle and comprising Al,
wherein an Al content based on a total of 100 at% of Ni, Mn, and Al on a surface of the positive electrode active material is 20 at% to 33 at%.

2. The positive electrode active material as claimed in claim 1, wherein:
(i) the Al content of the coating layer is 0.5 mol% to 1.5 mol% based on 100 mol% of a total metal excluding lithium in the positive electrode active material; and/or
(ii) the coating layer is in a form of a shell that continuously surrounds a surface of the core particle.

3. The positive electrode active material as claimed in claim 1 or claim 2, wherein:
(i) the coating layer has a thickness of 5 nm to 200 nm; and/or
(ii) a deviation of a thickness of the coating layer within one positive electrode active material particle is less than or equal to 20%.

4. The positive electrode active material as claimed in any one of claims 1 to 3, wherein:
(i) the coating layer comprises a layered aluminium compound; and/or
(ii) the coating layer comprises aluminium oxide, lithium-aluminium oxide, or a combination thereof; and/or
(iii) the coating layer comprises LiAlO₂.

5. The positive electrode active material as claimed in any one of claims 1 to 4, wherein:
(i) the coating layer further comprises nickel, manganese, or a combination thereof; and/or
(ii) in the layered lithium nickel-manganese-based composite oxide of the core particle, the nickel content is 60 mol% to 80 mol% and a manganese content is greater than or equal to 15 mol% based on 100 mol% of a total metal excluding lithium nickel in the layered lithium nickel-manganese-based composite oxide.

6. The positive electrode active material as claimed in any one of claims 1 to 5, wherein:
the layered lithium nickel-manganese-based composite oxide of the core particle further comprises aluminium, and an aluminium content in the core particle is 1 mol% to 3 mol% based on 100 mol% of a total metal excluding lithium in the layered lithium nickel-manganese-based composite oxide, optionally wherein:
a concentration of aluminium in the core particle is uniform.

7. The positive electrode active material as claimed in any one of claims 1 to 6, wherein:
(i) in the layered lithium nickel-manganese-based composite oxide of the core particle, a cobalt content is 0 mol% to 0.01 mol% based on 100 mol% of a total metal excluding lithium in the layered lithium nickel-manganese-based composite oxide; and/or
(ii) the layered lithium nickel-manganese-based composite oxide of the core particle is represented by Chemical Formula 1:
Chemical Formula 1 Liₐ₁Niₓ₁Mn_{y1}Al_{z1}M¹_{w1}O_{2-b1}X_{b1}
wherein in Chemical Formula 1, 0.9≤a1≤1.8, 0.6≤x1≤0.8, 0.1≤y1≤0.4, 0≤z1≤ 0.03, 0≤w1≤0.3, 0.9≤x1+y1+z1+w1≤1.1, and 0≤b1≤0.1, M¹ is one or more elements selected from B, Ba, Ca, Ce, Cr, Fe, Mg, Mo, Nb, Si, Sn, Sr, Ti, V, W, Y, and Zr, and X is one or more elements selected from F, P, and S; and/or
(iii) the core particles are secondary particles formed by agglomerating a plurality of primary particles, and
an average particle diameter (D₅₀) of the positive electrode active material is 1 µm to 25 µm.

8. A method for preparing a positive electrode active material, the method comprising:
preparing core particles comprising a layered lithium nickel-manganese-based composite oxide having a nickel content of greater than or equal to 60 mol% based on 100 mol% of a total metal excluding lithium in the layered lithium nickel-manganese-based composite oxide,
adding aluminium sulfate and the core particles to an aqueous solvent and mixing them together to prepare a mixed solution, and
removing the aqueous solvent from the mixed solution, drying the resulting product, and performing heat treatment at a temperature range of 730 °C to 800 °C to obtain a positive electrode active material.

9. The method as claimed in claim 8, wherein:
(i) the heat treatment is performed at a temperature in a range of 750 °C to 775 °C; and/or
(ii) in the layered lithium nickel-manganese-based composite oxide, based on 100 mol% of a total metal excluding lithium in the layered lithium nickel-manganese-based composite oxide, the nickel content is 60 mol% to 80 mol%, a manganese content is greater than or equal to 15 mol%, an aluminium content is 0 mol% to 3 mol%, and a cobalt content is 0 mol% to 0.01 mol%; and/or
(iii) an aluminium content of the aluminium sulfate is 0.5 to 1.5 mol% based on 100 mol% of a total metal excluding lithium in the core particles and aluminium of the aluminium sulfate.

10. The method as claimed in claim 8 or claim 9, wherein:
after adding the core particles to the aqueous solvent and mixing, aluminium sulfate is added to prepare a mixed solution.

11. The method as claimed in claim 8 or claim 9, wherein:
(i) a coating solution is prepared by adding aluminium sulfate to the aqueous solvent and mixing, and then adding the core particles to the coating solution and mixing to prepare a mixed solution, optionally wherein a time utilized to add core particles to the coating solution is 30 seconds/500 g to 2 minutes/500 g, and a mixing time after adding the core particles to the coating solution is 15 to 60 minutes, and a pH of the supernatant after completion of mixing is 5.5 to 7.5; and/or
(ii) after removing the aqueous solvent from the mixed solution, drying the obtained product is carried out in a vacuum condition at 40 °C to 240 °C.

12. The method as claimed in any one of claims 8 to 11, wherein:
(i) a coated product obtained by removing the aqueous solvent from the mixed solution and drying the resulting product comprises the core particles and an Al-containing coating layer on the surface of the core particles, and the Al-containing coating layer is in a form of a mesh or a spider web; and/or
(ii) the positive electrode active material comprises core particles comprising a layered lithium nickel-manganese-based composite oxide having a nickel content of greater than or equal to 60 mol% based on 100 mol% of a total metal excluding lithium in the layered lithium nickel-manganese-based composite oxide, and a coating layer on the surface of the core particles and comprising aluminium oxide, lithium-aluminium oxide, or a combination thereof.

13. A positive electrode, comprising:
a positive electrode current collector, and
a positive electrode active material layer on the positive electrode current collector,
wherein the positive electrode active material layer comprises the positive electrode active material as claimed in any one of claims 1 to 7.

14. The positive electrode as claimed in claim 13, wherein:
(i) the positive electrode active material layer has a loading level of 10 mg/cm² to 40 mg/cm²; and/or
(ii) the positive electrode active material layer has a density of 3.3 g/cc to 3.7 g/cc.

15. A rechargeable lithium battery, comprising:
the positive electrode as claimed in claim 13 or claim 14,
a negative electrode, and
an electrolyte, optionally wherein:
a charging voltage is greater than or equal to 4.45 V.
